# EUROPEAN PATENT APPLICATION

(11) **EP 2 897 046 A1**
(43) Date of publication of application: **22.07.2015**
(21) Application number: 13837116.6
(22) Date of filing: 27.08.2013
(51) Int. Cl.: G06F 9/445

(54) **METHOD AND DEVICE FOR INSTALLING ASSEMBLY-TYPE MULTI-MODE NETWORK MANAGEMENT PATCH PACK**

(30) Priority: 17.09.2012 CN 201210345599
(71) Applicant: ZTE Corporation, Shenzhen, Guangdong 518057 (CN)
(72) Inventor: ZHANG, Jinxin, Shenzhen Guangdong 518057 (CN)
(74) Representative: Gevers Patents
(86) International application number: PCT/CN2013/082406
(87) International publication number: WO 2014/040496

(57) **Abstract**

Method and device for installing assembly-type multi-mode network management patch pack are provided, relating to the technical field of patch manufacture and installation, comprising: constructing a multi-mode network management patch pack by assembling multiple patches of different modes decoupling-deployed and stored independently; storing the patch pack in a patch server and downloading the patch pack therefrom; determining whether an installation object corresponding to the downloaded patch pack meets installing conditions of the patch pack; and installing the patch pack, when the installing conditions of the patch pack are met. Accordingly, the patches in the present invention have flexible and convenient characteristics, so developers only need to pay attention to patches of respective modes, and finally a version builder constructs a patch pack according to usage scenarios flexibly and conveniently. Therefore the problem of low success rate of patch installation is solved, safety risks are reduced or eliminated, and system safety performance is guaranteed.

## Description

### TECHNICAL FIELD

The disclosure relates to the field of patch making and installation, and in particular to a method and device for installing a component patch pack for multi-mode network management.

### BACKGROUND

A patch refers to a file for repairing a software problem, such as a security risk, a bug, etc., as well as improving ease of use or effectiveness, etc. A patch cannot be used alone but needs to be used together with the original software. Patch making refers to generating an available patch pack to be executed by a patch installation system. Patch installation refers to executing a patch program to repair an existing bug.

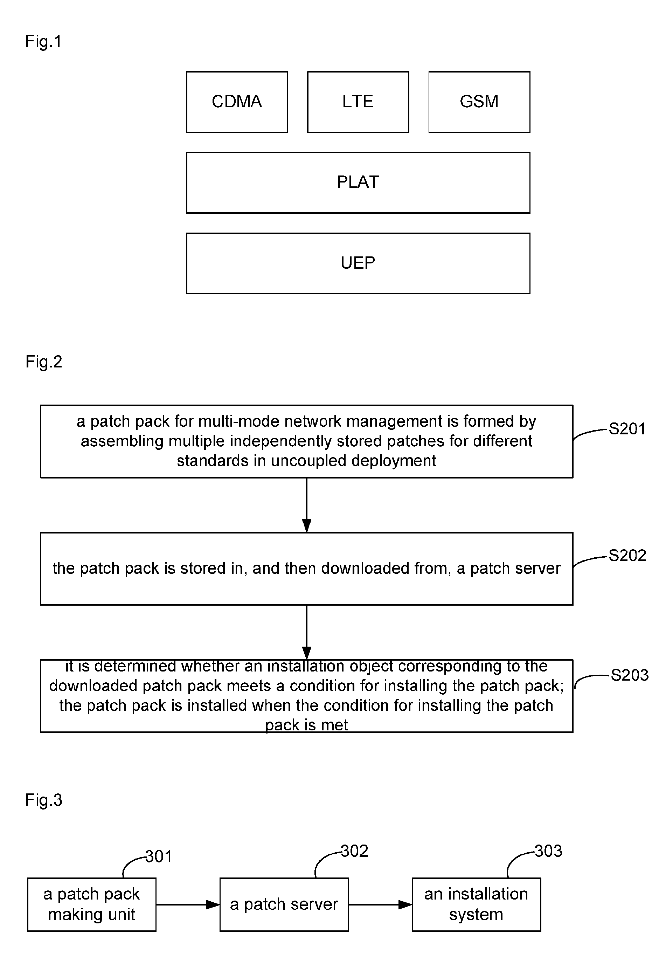

Multi-mode network management refers to communication network management supporting multiple wireless standards, such as Code Division Multiple Access (CDMA), Long Term Evolution (LTE), etc. Multi-mode network management may include three software layers, as shown in Fig.1. At the bottom is a unified network management platform (UEP) providing a basic service. In the middle is a multi-mode network management platform (PLAT) providing a multi-mode network management platform function. At the top is a wireless standard specific application product for implementing standard specificity.

In study of existing multi-mode network management patching, during patch making and installation, problems as follows are found.
1, patching may involve multiple standards. Due to lack of decoupling or insufficient decoupling of patching among standards, different patches may have to be made for different scenes, leading to excessive redundancy and waste.
2, patching may involve multiple standards and thus may involve extremely inflexible installation. Installation needs to be performed with strict standard matching. For example, a patch pack containing a standard A and a standard B can be installed only to an installation object containing both the standard A and the standard B.
3, the patch may involve multiple standards. There may be repeated executions. No installation order can be guaranteed.

### SUMMARY

In view of this, an embodiment herein provides a method and device for installing a component patch pack for multi-mode network management, capable of improving a success rate in patch installation, reducing or eliminating a security risk, guaranteeing system security performance .

To this end, a technical solution of an embodiment herein may be implemented as follows.

An embodiment herein provides a method for installing a method for installing a component patch pack for multi-mode network management, including:
forming a patch pack for multi-mode network management by assembling multiple independently stored patches for different standards in uncoupled deployment;
storing the patch pack in a patch server, and downloading the patch pack from the patch server; and
determining whether an installation object corresponding to the downloaded patch pack meets a condition for installing the patch pack, and installing the patch pack when the condition for installing the patch pack is met.

The downloading the patch pack from the patch server may include:
after a multi-mode network management server is successfully connected to the patch server, downloading, by the patch server, the patch pack for multi-mode network management to the multi-mode network management server; and
after a multi-mode network management client gets access to the multi-mode network management server, downloading, by the multi-mode network management server, the patch pack for multi-mode network management to the multi-mode network management client.

The installation object may include an installation object of the multi-mode network management server and an installation object of the multi-mode network management client.

The patch pack for multi-mode network management may include: patch pack release description; and multiple groups of files, wherein each group of files correspond to one of multiple standards and comprise a replacement file, an added file, a deleted file list description file, a database script, and a script list description file.

The determining whether an installation object corresponding to the downloaded patch pack meets a condition for installing the patch pack may include:
determining whether the installation object meets the condition for installing the patch pack by comparing release description of the installation object with the patch pack release description.

The determining whether the installation object meets the condition for installing the patch pack may include:
determining whether any standard corresponding to the patch pack exists in the installation object,
wherein when such a standard exists in the installation object, a file corresponding to the standard in the patch pack is to be installed; otherwise when no such standard exists in the installation object, the patch pack is not installed.

The determining whether an installation object corresponding to the downloaded patch pack meets a condition for installing the patch pack may further include:
checking a patch installation history of the installation object to determine whether the patch pack has been installed;
when the patch pack has been installed, the patch pack is not installed to avoid repeated installation.

The installing the patch pack may include:
backing up a deleted file or a replaced file in the installation object, and recording an added file;
copying a replacement file and an added file corresponding to a standard in the patch pack to the installation object;
deleting a file of the installation object according to the deleted file list description file;
executing a database script according to the script list description file.

The patch pack for multi-mode network management may further include a patch program that cannot be decoupled completely and an inter-standard description file;
in installing the patch pack, the patch program that cannot be decoupled completely is copied according to the inter-standard description file.

An embodiment herein provides a device for installing a component patch pack for multi-mode network management, including:
a patch pack making unit configured for forming a patch pack for multi-mode network management by assembling multiple independently stored patches for different standards in uncoupled deployment;
a patch server configured for storing and downloading the patch pack for multi-mode network management; and
an installation system configured for determining whether an installation object corresponding to the downloaded patch pack meets a condition for installing the patch pack, and installing the patch pack when the condition for installing the patch pack is met.

Compared to existing art, an embodiment herein is advantageous in that: according to an embodiment herein, flexible easy patching may be implemented, reducing a frequency in patch pack making; a developer may only have to focus on patching for a specific standard; a final patch pack may be flexibly built by a release architect according to an application scene; a success rate in patch installation may be improved via an effective matching strategy, effectively correcting a program error, reducing a security risk.

### BRIEF DESCRIPTION OF THE DRAWINGS

Fig.1 is a diagram of architecture of multi-mode network management according to existing art.
Fig.2 is a flowchart of a method for installing a component patch pack for multi-mode network management according to an embodiment herein.
Fig.3 is a diagram of a structure of a device for installing a component patch pack for multi-mode network management according to an embodiment herein.
Fig.4 is a diagram of a structure of a patch pack made according to an embodiment herein.
Fig.5 is a flowchart of patch pack installation according to an embodiment herein.
Fig.6 is a flowchart of installing a component patch pack for multi-mode network management according to an embodiment herein.

### DETAILED DESCRIPTION

Embodiments herein are elaborated below with reference to drawings. Note that embodiments illustrated below are only for illustrating and explaining the disclosure instead of limiting the disclosure.

Fig.2 is a flowchart of a method for installing a component patch pack for multi-mode network management according to an embodiment herein. As shown in Fig.2, the method may include steps as follows.

In step S201, a patch pack for multi-mode network management is formed by assembling multiple independently stored patches for different standards in uncoupled deployment.

The patch pack for multi-mode network management may include: patch pack release description; and multiple groups of files, wherein each group of files correspond to one of multiple standards and comprise a replacement file, an added file, a deleted file list description file, a database script, and a script list description file.

The patch pack for multi-mode network management may further include a patch program that cannot be decoupled completely and an inter-standard description file. In installing the patch pack, the patch program that cannot be decoupled completely may be copied according to the inter-standard description file. The patch program may include the replacement file and the added file.

In step S202, the patch pack is stored in, and then downloaded from, a patch server.

The patch pack may be downloaded from the patch server as follows. After a multi-mode network management server is successfully connected to the patch server, the patch server may download the patch pack for multi-mode network management to the multi-mode network management server. After a multi-mode network management client gets access to the multi-mode network management server, the multi-mode network management server may download the patch pack for multi-mode network management to the multi-mode network management client.

In step S203, it is determined whether an installation object corresponding to the downloaded patch pack meets a condition for installing the patch pack; the patch pack is installed when the condition for installing the patch pack is met.

The installation object may include an installation object of the multi-mode network management server and an installation object of the multi-mode network management client.

It may be determined whether an installation object corresponding to the downloaded patch pack meets a condition for installing the patch pack as follows. It may be determined whether the installation object meets the condition for installing the patch pack by comparing release description of the installation object with the patch pack release description. It may be determined whether the installation object meets the condition for installing the patch pack as follows. It may be determined whether any standard corresponding to the patch pack exists in the installation object. When such a standard exists in the installation object, a file corresponding to the standard in the patch pack is to be installed; otherwise when no such standard exists in the installation object, the patch pack is not installed.

It may be determined whether an installation object corresponding to the downloaded patch pack meets a condition for installing the patch pack further as follows. A patch installation history of the installation object may be checked to determine whether the patch pack has been installed. When the patch pack has been installed, the patch pack is not installed to avoid repeated installation.

Fig.3 is a diagram of a structure of a device for installing a component patch pack for multi-mode network management according to an embodiment herein. As shown in Fig.3, the device may include:
a patch pack making unit 301 configured for forming a patch pack for multi-mode network management by assembling multiple independently stored patches for different standards in uncoupled deployment;
a patch server 302 configured for storing and downloading the patch pack for multi-mode network management; and
an installation system 303 configured for determining whether an installation object corresponding to the downloaded patch pack meets a condition for installing the patch pack, and installing the patch pack when the condition for installing the patch pack is met.

The patch pack making unit 301, the patch server 302, and the installation system 303 may be implemented by a Central Processing Unit (CPU), a Digital Signal Processor (DSP), or a Field-Programmable Gate Array (FPGA) in the device for installing a component patch pack for multi-mode network management.

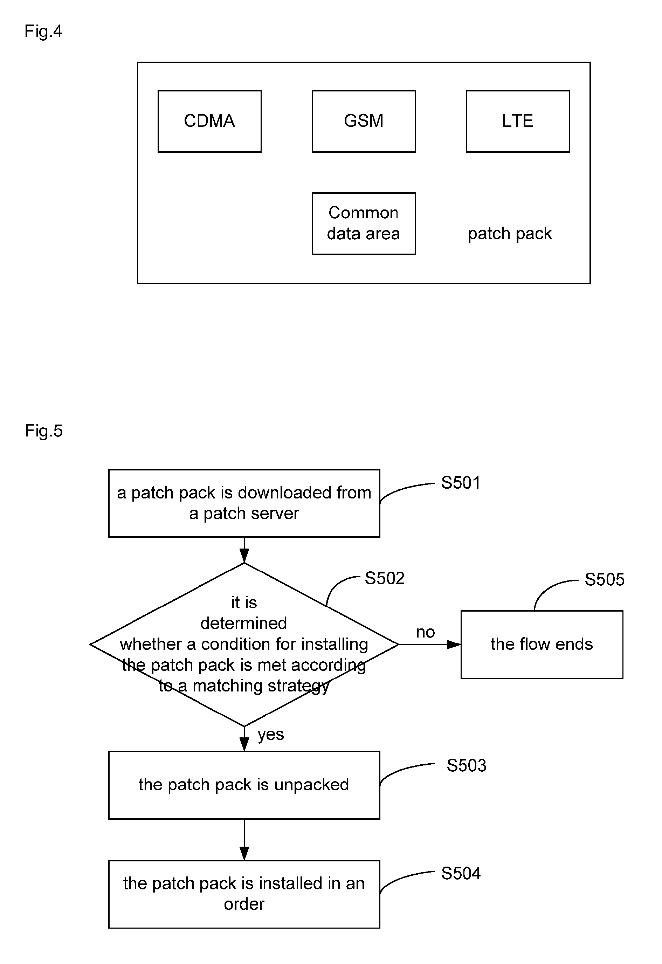

Shown in Fig.4 to Fig.6 are embodiments herein for making and installing the patch pack for multi-mode network management. The disclosure is elaborated below with reference to embodiments shown in Fig.4 to Fig.6.

Fig.4 shows a structure of a patch pack made according to an embodiment herein.

In making a patch pack according to the disclosure, patches for various standards may be put together, or separated from each other in uncoupled deployment and be stored independently. The patch for each standard may be deployed in a root directory of the patch pack. Patches for various standards may be combined freely according to an application scene to form a patch pack.

A patch that cannot be decoupled according to standards may be stored in a common directory. Inter-standard association may be described using a description file. Patch pack attribute description may be included too.

A patch pack attribute may include: a release number, patch installation numbering, a standard name, an installation mode, an area, and a time stamp indicating when the patch pack was made. A patch pack attribute may be directly shown by a patch pack name. An underline may separate two attributes, as shown in 12.12.10_011_GU_SC_CHINA_20120208.zip, for example.

As patches for various standards may be put together or separated from each other, a release architect may assemble a patch release flexibly and quickly according to an application scene.

The structure of the xml file describing an inter-standard relation may be as follows.

```
   <?xml version="1.0" encoding="GB2312"?>
   <FileList>
        <File module="standard 1:standard 2" >
       <src> xxxxxx </src>
        </File>
   </FileList>
```

There may be a deleted file list description file for each standard for deleting a file from an installation object. The deleted file list description file may be described by xml, with a structure as follows.

```
   <?xml version="1.0" encoding="GB2312"?>
   <FileList>
   <clnt>
   <src>xxxxx</src>
   </clnt>
   <svr>
   <src>xxxxx</src>
   </svr>
   </FileList>
```

There may be a script list description file for each standard for describing a database script to be executed. The script list description file may be described by xml, with a structure as follows.

```
   <?xml version="1.0" encoding="GB2312"?>
   <INSTDB>
     <en_US>
        <MSSQL>
              <scriptList>
                     <fileName>xxxxx.sql</fileName>
              </scriptList>
        </MSSQL>
        <ORACLE>
                 <scriptList>
                     <fileName>xxxxx.sql</fileName>
              </scriptList>
        </ORACLE>
      </en_US>
    <zh_CN>
        <MSSQL>
             <scriptList>
                     <fileName>xxxxx.sql</fileName>
              </scriptList>
        </MSSQL>
        <ORACLE>
                 <scriptList>
                     <fileName>xxxxx.sql</fileName>
              </scriptList>
        </ORACLE>
    </zh_CN>
   </INSTDB>
```

The directory for each standard may be structured identical to that of the installation object. The installation system may perform overwriting patch installation directly.

The release architect may assemble patches for various standards into a final patch pack, and form the patch pack release description using a file name in format of: release number-patch numbering-standard name-installation mode-area-submitting time.

The patch pack release description may include:
a release number consistent with that of the installation object;
patch numbering specifying a patch installation order;
an installation mode, indicating server program modification with a letter S and indicating client program modification with a letter C;
an area indicating a nation and a region applicable; and
a submitting time showing when the patch was released.

Fig.5 shows a flowchart of patch pack installation according to an embodiment herein. As shown in Fig.5, the flow may include steps as follows.

In step S501, a patch pack is downloaded from a patch server.

Any patch pack for multi-mode network management may be stored at an upper-layer network management. After being connected to the upper-layer network management successfully, the multi-mode network management server may download a patch pack from the upper-layer network management via FTP, and then install a patch pack server patch to update the multi-mode network management server. After accessing the multi-mode network management server, a multi-mode network management client may download the patch pack from the multi-mode network management server via FTP, and then install a patch pack client patch to update a client environment. The client patch pack may first be stored in the upper-layer network management, then downloaded to the multi-mode network management server, and finally used to update the multi-mode network management client.

In step S502, it is determined whether a condition for installing the patch pack is met according to a matching strategy.

Release description of an installation object may be acquired, may be compared with release description of the patch pack to determine whether the installation object corresponding to the patch pack meets the condition for installing the patch pack. Step S503 is executed when the condition is met; otherwise step S505 is executed when the condition is not met.

The matching strategy may include release number matching, standard matching, installation mode matching, and area matching.

It may be determined whether the release numbers are consistent. In case of inconsistent release numbers, unpacking and installation is not performed.

It may be determined whether any standard corresponding to the patch pack exists in the installation object. When no such standard exists in the installation object, unpacking and installation is not performed. For example, a standard 1 and a standard 2 exist in the installation object, while the patch pack contains a patch for a standard 3, then unpacking and installation is not performed. In another example, when a standard 1 and a standard 2 exist in the installation object while the patch pack contains patches for the standard 2 and a standard 3, unpacking and installation may be performed for standard 2.

It may be determined whether the installation mode of the patch pack (in terms of client or server) is consistent with that of the installation object. Unpacking and installation is not performed when inconsistency is found. For example, the installation object may have a server mode while the patch pack may have a client mode, in which case unpacking and installation is not performed.

It may be determined whether the area described in the patch pack is consistent with that of the installation object. Unpacking and installation is not performed when inconsistency is found. For example, when the area for the installation object is china and the area for the patch pack is American, unpacking and installation is not performed.

It may be determined, by comparing a patch with a historical patch installation record, whether the patch has been installed. When the patch has been installed, unpacking and installation is not performed to avoid repeated installation.

In step S503, the patch pack is unpacked.

In step S504, the patch pack is installed in an order.

Namely, a patch pack may be installed according to patch numbering described in a patch pack name. The patch pack may be unpacked and installed according to an order. The patch pack order may be obtained using patch installation numbering of the patch pack name. A patch with a small number may be executed first. A patch with a large number may be executed later. The patch pack may be installed by file replacement, file deletion, file addition, and installation information updating. Based on a strategy of free combination, the installation system will match the standard of an installed existing program to a standard in the patch pack. When patches for more standards are contained in the patch pack than in the installation object, the patch installation system may perform patch installation only for any standard existing in the installation object. Any installed patch pack may be filtered out according to the patch installation history to avoid repeated executions.

The flow ends in step S505.

After the patch pack installation completes, an installation result may be returned. In case of an installation failure, a cause for the failure may have to be described.

That is, patch pack installation may include a flow of:
downloading a patch pack from a patch server; determining whether an installation object corresponding to the patch pack meets a condition for installing the patch pack; when the condition is met, unpacking the patch pack and installing the patch pack in an order.

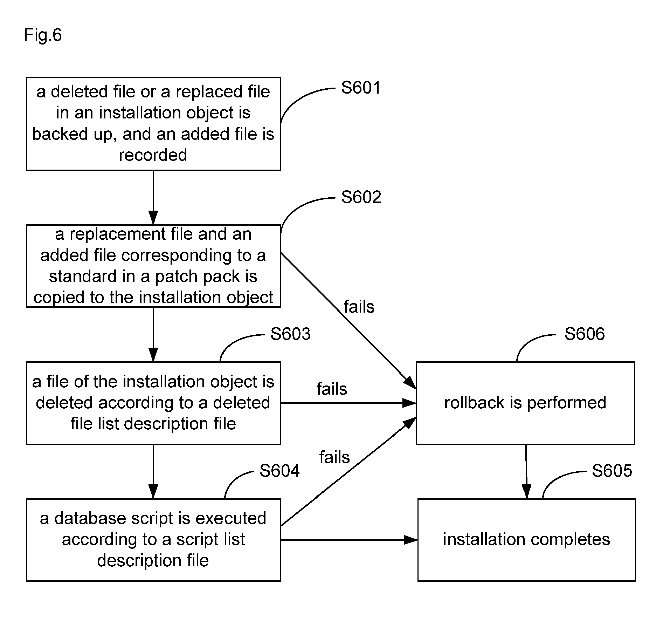

Fig.6 shows a flowchart of installing a component patch pack for multi-mode network management according to the disclosure. As shown in Fig.6, the flow may include steps as follows.

In step S601, a deleted file or a replaced file in an installation object is backed up, and an added file is recorded.

In step S602, a replacement file and an added file corresponding to a standard in a patch pack is copied to the installation object.

In step S603, a file of the installation object is deleted according to a deleted file list description file.

In step S604, a database script is executed according to a script list description file.

When installation abnormality in step S602, S603, or S604 leads to an installation failure, step S606 needs to be executed to perform a corresponding rollback operation to ensure that the installation object will not become unavailable because of the patch installation failure.

In step S605, installation completes.

When installation completes, the historical patch installation record and installation object information may be updated, and an installation result may be returned, showing whether patch installation succeeds or fails. In case that installation fails, a cause for the failure needs to be shown.

In step S606, rollback is performed.

By rollback, it means a former drive is restored. An updated drive may have immaturity such as various bugs, or small problems such as incompatibility with a former software, game, or the like. When the new drive is not satisfactory, drive rollback may be performed.

To sum up, with a method and device for installing a component patch pack for multi-mode network management according to an embodiment herein, flexible easy patching may be implemented, reducing a frequency in patch pack making; a developer may only have to focus on patching for a specific standard; a final patch pack may be flexibly built by a release architect according to an application scene; a success rate in patch installation may be improved via an effective matching strategy, effectively correcting a program error, reducing a security risk.

What described are merely embodiments herein, and are not for limiting the protection scope of the disclosure. Any modification, equivalent replacement, and improvement made according to the disclosure is contained in the protection scope of the disclosure.

### Industrial Applicability

In an embodiment herein, a patch pack for multi-mode network management is formed by assembling multiple independently stored patches for different standards in uncoupled deployment; the patch pack is stored in, and then downloaded from, a patch server; it is determined whether an installation object corresponding to the downloaded patch pack meets a condition for installing the patch pack; the patch pack is installed when the condition for installing the patch pack is met. Thus, flexible easy patching may be implemented, reducing a frequency in patch pack making; a success rate in patch installation may be improved via an effective matching strategy, effectively correcting a program error, reducing a security risk.

## Claims

1. A method for installing a component patch pack for multi-mode network management, comprising:
forming a patch pack for multi-mode network management by assembling multiple independently stored patches for different standards in uncoupled deployment;
storing the patch pack in a patch server, and downloading the patch pack from the patch server; and
determining whether an installation object corresponding to the downloaded patch pack meets a condition for installing the patch pack, and installing the patch pack when the condition for installing the patch pack is met.

2. The method according to claim 1, wherein the downloading the patch pack from the patch server comprises:
after a multi-mode network management server is successfully connected to the patch server, downloading, by the patch server, the patch pack for multi-mode network management to the multi-mode network management server; and
after a multi-mode network management client gets access to the multi-mode network management server, downloading, by the multi-mode network management server, the patch pack for multi-mode network management to the multi-mode network management client.

3. The method according to claim 2, wherein the installation object comprises an installation object of the multi-mode network management server and an installation object of the multi-mode network management client.

4. The method according to claim 3, wherein the patch pack for multi-mode network management comprises: patch pack release description; and multiple groups of files, wherein each group of files correspond to one of multiple standards and comprise a replacement file, an added file, a deleted file list description file, a database script, and a script list description file.

5. The method according to claim 4, wherein the determining whether an installation object corresponding to the downloaded patch pack meets a condition for installing the patch pack comprises:
determining whether the installation object meets the condition for installing the patch pack by comparing release description of the installation object with the patch pack release description.

6. The method according to claim 5, wherein the determining whether the installation object meets the condition for installing the patch pack comprises:
determining whether any standard corresponding to the patch pack exists in the installation object,
wherein when such a standard exists in the installation object, a file corresponding to the standard in the patch pack is to be installed; otherwise when no such standard exists in the installation object, the patch pack is not installed.

7. The method according to claim 5, wherein the determining whether an installation object corresponding to the downloaded patch pack meets a condition for installing the patch pack further comprises:
checking a patch installation history of the installation object to determine whether the patch pack has been installed;
when the patch pack has been installed, the patch pack is not installed to avoid repeated installation.

8. The method according to claim 4, 6 or 7, wherein the installing the patch pack comprises:
backing up a deleted file or a replaced file in the installation object, and recording an added file;
copying a replacement file and an added file corresponding to a standard in the patch pack to the installation object;
deleting a file of the installation object according to the deleted file list description file;
executing a database script according to the script list description file.

9. The method according to claim 8, wherein the patch pack for multi-mode network management further comprises a patch program that cannot be decoupled completely and an inter-standard description file;
in installing the patch pack, the patch program that cannot be decoupled completely is copied according to the inter-standard description file.

10. A device for installing a component patch pack for multi-mode network management, comprising:
a patch pack making unit configured for forming a patch pack for multi-mode network management by assembling multiple independently stored patches for different standards in uncoupled deployment;
a patch server configured for storing and downloading the patch pack for multi-mode network management; and
an installation system configured for determining whether an installation object corresponding to the downloaded patch pack meets a condition for installing the patch pack, and installing the patch pack when the condition for installing the patch pack is met.
